Europäisches Patentamt

European Patent Office

Office européen des brevets

(19)

(11) Veröffentlichungsnummer : **0 013 556**
**B1**

(12) **EUROPÄISCHE PATENTSCHRIFT**

(45) Veröffentlichungstag der Patentschrift :
13.03.85

(21) Anmeldenummer : 80100020.9

(22) Anmeldetag : 04.01.80

(51) Int. Cl.⁴ : **C 08 J   5/18**

(54) **Antistatisch beschichtete, biaxial gestreckte Polyesterfolie und Verfahren zur Herstellung derselben.**

(30) Priorität : 05.01.79 US 1328
31.01.79 US 8012

(43) Veröffentlichungstag der Anmeldung :
23.07.80 Patentblatt 80/15

(45) Bekanntmachung des Hinweises auf die Patenterteilung : 13.03.85 Patentblatt 85/11

(84) Benannte Vertragsstaaten :
BE DE FR GB IT LU NL SE

(56) Entgegenhaltungen :
FR-A- 2 381 622
US-A- 3 264 136
US-A- 3 933 516
US-A- 4 089 997

(73) Patentinhaber : AMERICAN HOECHST CORPORA-
TION
Route 202-206 North
Somerville, N.J. 08876 (US)

(72) Erfinder : Heberger, John M.
Sunrise Drive, Route 8, Greer
Greenville South Carolina (US)

(74) Vertreter : Euler, Kurt Emil, Dr. et al
KALLE Niederlassung der Hoechst AG Rheingaustrasse 190 Postfach 3540
D-6200 Wiesbaden 1 (DE)

Jouve, 18, rue St-Denis, 75001 Paris, France

0 013 556

## Beschreibung

Die Erfindung bezieht sich auf eine verbesserte Polyesterfolie, die ausgezeichnete antistatische Eigenschaften aufweist sowie auf ein Verfahren zur Herstellung der Folie.

Insbesonders bezieht sich die Erfindung auf eine biaxial gestreckte Polyesterfolie, die sowohl verbesserte antistatische Eigenschaften als auch verbesserte Gleiteigenschaften und Transparenz aufweist.

Vorzugsweise bezieht sich die Erfindung auf eine beschichtete Polyäthylenterephthalat-Folie.

Das Anwachsen des Mikrofilm- und Magnetbandmarktes hat den Gebrauch von Polyesterfolien als Trägerfolien für diese Gebiete stark steigen lassen.

Polyesterfolien laden sich jedoch, insbesondere bei niedriger relativer Luftfeuchtigkeit, infolge Reibung elektrostatisch auf. Durch dieses elektrostatische Aufladen werden nicht nur Staub und andere Verunreinigugen angezogen, sondern auch zusätzlich andere Polyesterfolien. Durch die elektrostatische Aufladung wird z. B. das Zuordnen, Sortieren und Entwickeln der Mikrofilm-Karten erschwert, da die Karten aneinander kleben.

Zur Bewältigung dieses ernsthaften Problems wurden bereits antistatische Polyesterfolien entwickelt. Antistatische Polyesterfolien werden gewöhnlich durch Aufbringen einer antistatischen Beschichtung auf die Oberfläche der Polyesterfolie hergestellt. Viele dieser Beschichtungen haben mit Erfolg die elktrostatischen Eigenschaften der Polyesterfolien zufriedenstellend gesenkt. Jedoch verursachen viele dieser Beschichtungen das sogenannte Blocken, d. h. daß die mit einer antistatischen Schicht versehene Polyesterfolie einen so großen Reibungskoeffizienten hat, daß jeweils eine Schicht der Folie nicht über eine andere Schicht bzw. über Rollen oder ähnliche Vorrichtungen gleitet, über welche sich die Folie während eines Arbeitsvorganges bewegt.

Ein anderes Problem, das sich aus der Beschichtung der Oberfläche einer Polyesterfolie mit einer antistatischen Schicht ergibt, besteht in dem daraus resultierenden Mangel an Transparenz. Transparenz spielt in der Mikrofilmanwendung jedoch eine wesentliche Rolle. Mikrofilme müssen gut lesbar sein. Hierbei wird Licht durch die Folie hindurchprojeziert, so daß der Leser die auf der Folie aufgedruckte Information lesen kann. Eine geringe Transparenz der Folie führt zu Verschwommenheit und Leseschwierigkeiten, weil das Licht an Intensität verliert.

Diese Erörterung zeigt, wie wichtig es ist, daß die Polyesterfolie sowohl gute antistatische Eigenschaften als auch gute Gleitfähigkeit, d. h. gute Verarbeitungsfähigkeit und Transparenz haben muß. Deshalb ist es ausschlaggebend, daß die antistatische Beschichtung alle drei Eigenschaften aufweist.

Obwohl der Stand der Technik auch Verfahren umfaßt, die sich auf die antistatische Beschichtung von Polyesterfolien beziehen, so werden jedoch keine Folien erzielt, die eine Kombination guter Antistatik-, Gleit- und Transparenzeigenschaften aufweisen.

Die U. S.-Patentschrift No. 4 089 997 bezieht sich auf den Einsatz eines Stearamido-Propyl-Dimethyl-β-Hydroxyäthyl-Ammonium-Nitrats. In der Beschreibung werden jedoch noch weitere Bestandteile aufgeführt, die anders sind als diejenigen, welche gemäß dieser Erfindung verwendet werden und die nicht die hervorragende Kombination von Antistatik-, Gleit- und Transparenzeigenschaften aufweisen.

Nicht nur die Bestandteile der antistatischen Beschichtung sind für Antistatik-, Gleit- und Transparenzeigenschaften der Folie von großer Bedeutung. Auch die Konzentration dieser Bestandteile spielt eine wesentliche Rolle.

So beschreibt z. B. die U. S.-Patentschrift No. 3 264 136 eine Beschichtung, die 0,2 Vol-Prozent an Stearamido-Propyl-Dimethyl-β-Hydroxyäthyl-Ammonium-Nitrat in Kombination mit Polymethyl-Methacrylat aufweist. Diese Kombination erbrachte allerdings nicht die Antistatik-, Gleit- und Transparenzeigenschaften, die bei Mikrofilmen und Magnetbändern auf der Basis von Polyesterfolien erforderlich sind.

Eine zusätzliche Bedingung bei der Herstellung von antistatischen Folien, die nicht auf die Folieneigenschaften bezogen ist, liegt in dem Beschichtungsmittel selbst. Es genügt nicht, daß eine Latexbeschichtung nur die erwähnten wichtigen Eigenschaften aufweist. Die Latexbeschichtung muß auch beständig sein, d. h., daß sich das Beschichtungsmittel bei Nichtgebrauch während mindestens einer Woche nicht in ein Zwei-Phasen-System auftrennt. Diese Eigenschaft, nämlich eine ausreichende Verarbeitungsdauer, ist für die wirtschaftliche Ausnutzung eines Beschichtungsverfahrens unumgänglich. Eine antistatische Beschichtung, die zwar ausgezeichnete Antistatik-, Gleit- und Transparenzeigenschaften bietet, jedoch nicht lange genug als Emulsion vorliegt, um eine angemessene Folienlänge beschichten zu können, ist wertlos.

Es stellte sich somit die Aufgabe, eine beschichtete Polyesterfolie zu entwickeln, die gute antistatische Eigenschaften, kleinen Reibungskoeftizienten, d. h. guten Schlupf und hohe Transparenz aufweist und wobei gleichzeitig das Beschichtungsmittel eine ausgezeichnete Verarbeitungsdauer besitzt.

Gelöst wird die vorstehend genannte Aufgabe durch eine Folie, wie sie in den Ansprüchen definiert wird. Die erfindungsgemäße Polyesterfolie, die zweiachsig orientiert ist, wird auf einer Seite mit einer Latexbeschichtung versehen.

Die Beschichtung besteht aus Stearamido-Propyl-Dimethyl-β-Hydroxyäthyl-Ammonium-Nitrat in

2

einer Konzentration von 2,75 bis 3,20 Gewichtsprozent, bezogen auf das Gesamtgewicht des Beschichtungsmittels. Zusätzlich enthält die Beschichtung ein vernetztes Methyl-Methacrylat/Äthyl-Acrylat/Methacrylamid-Terpolymer, das eine Glasübergangstemperatur von 40 °C bis 50 °C aufweist und in einer Konzentration von 0,85 bis 1,16 Gewichtsprozent, bezogen auf das Gesamtgewicht des Beschichtungsmittels, vorhanden ist. Das Gewichtsverhältnis der beiden Bestandteile der Beschichtung, d. h. das Verhältnis des Nitrats zum Terpolymer liegt zwischen 2,75 : 1 und 3,20 : 1.

Gemäß dem erfindungsgemäßen Verfahren zur Herstellung der Folie wird eine einachsig gestreckte Polyesterfolie mit der Latexbeschichtung, wie sie oben definiert ist, beschichtet. Die einachsig gestreckte Polyesterfolie wird auf erhöhte Temperaturen erwärmt, wodurch das Wasser aus der Beschichtung ausgetrieben wird, d. h., es verdampft. Die getrocknete, beschichtete Folie wird dann in einer Richtung, die orthogonal zur ersten Streckrichtung ist, gestreckt, wodurch die antistatische, zweiachsig gestreckte Polyesterfolie entsteht.

Die Polyesterträgerfolie, auf die die antistatische Schicht aufgebracht wird, kann aus jedem thermoplastische Folien bildenden Polyester bestehen. Diese Polyester werden durch Kondensation einer Dicarbonsäure oder eines aus einer solchen Säure resultierenden niederen Alkyldiesters mit mit einem Glykol gewonnen. Als Dicarbonsäuren oder deren niederen Alkyldiestern sind erfindungsgemäß eingeschlossen : Terephthalsäure ; Isophthalsäure ; Phthalsäure ; 2,5- ; 2,6- oder 2,7-Naphthalen-Dicarbonsäuren ; Bernsteinsäure ; Sebazinsäure ; Adipinsäure ; Azelainsäure ; Bibenzoinsäure ; Hexahydro-Terephthalsäure sowie Bis-p-Carboxyl-Phenoxyl-Äthan.

Eine oder mehrere dieser Dicarbonsäuren oder ihrer niederen Alkyldiestern reagieren mit einem oder mehreren Glykolen, z. B. Äthylenglykol, 1,3-Propandiol, 1,4-Butandiol, Neopentylglykol oder 1,4-Cyclohexandimethanol. Dadurch, daß ein oder mehrere Diester mit einem oder mehreren Glykolen zur Reaktion gebracht werden können, ist die Polyesterträgerfolie nicht auf Homopolyester begrenzt, sondern umfaßt auch Copolyester.

Polyäthylenterephthalat ist von den folienbildenden Polyestern derjenige, der in dieser Erfindung bevorzugt wird. Die Polyäthylenterephthalat-Folie wird hergestellt aus einem Polymer, das durch Polymerisation aus Bis-(2-Hydroxyäthyl)-Terephthalat gewonnen wird.

Bis-(2-Hydroxyäthyl)-Terephthalat selbst wird als Zwischenprodukt durch zwei verschiedene Methoden gewonnen. Eine Methode zur Gewinnung von Bis-(2-Hydroxyäthyl)-Terephthalat besteht in der direkten Veresterung von Terephthalsäure und Äthylglykol, wie sie in der U. S.-Patentschrift No. 3 050 533 beschrieben ist. Bei dieser Methode wird das als Nebenprodukt anfallende Wasser vom Reaktionsprodukt abdestilliert. Die zweite Methode zur Herstellung von Bis-(2-Hydroxyäthyl)-Terephthalat besteht in der Umesterung eines Dialkylesters einer Terephthalatsäure, vorzugsweise Dimethylterephthalat, mit Äthylglykol. Vorzugsweise werden zwei Mol Äthylglykol mit einem Mol Dialkylterephthalat zur Reaktion gebracht. Noch besser ist jedoch der Einsatz von mehr als zwei Mol Äthylglykol pro Mol Dialkylterephthalat, da unter diesen Bedingungen der Start der Umesterungsreaktion schneller und vollständiger verläuft. Die Umesterungsreaktion wird bei erhöhter Temperatur durchgeführt. Vorzugsweise liegt die Temperatur etwa zwischen der Siedetemperatur des Reaktionsgemisches und bis zu 250 °C. Die Reaktion kann bei atmosphärischem, erhöhtem oder sehr hohem Druck erfolgen. Das Nebenprodukt der Umesterungsreaktion ist ein Alkohol. Wird z. B. Dimethyl-Terephthalat verwendet, so entsteht Methanol. Der Alkohol wird vom Reaktionsprodukt entfernt. Zur Steigerung der Reaktionsgeschwindigkeit können zahlreiche bekannte Katalysatoren bei der Umesterungsreaktion verwendet werden.

Nach seiner Herstellung wird das Bis-(2-Hydroxyäthyl)-Terephthalat in Polyäthylen-Terephthalat umgewandelt und zwar durch Erhitzung auf eine Temperatur, die über dem Siedepunkt des Äthylglykols oder des Reaktionsgemisches liegt, unter Bedingungen, die die Entfernung des Glykols oder des Wassers bewirken. Die Erhitzung kann nach Wunsch bis zu einer Temperatur von 325 °C erfolgen. Während der Erhitzung wird der Druck vermindert, damit das überschüssige Glykol oder Wasser schneller abdestilliert. Das fertige Polyäthylenterephthalat hat eine Intrinsic-Viskosität von mehr als 0,3 dl/g, gemessen in Orthochlorphenol bei 25 °C. Vorzugsweise liegt die Intrinsic-Viskosität des Polymers etwa zwischen 0,4 und 1,0 dl/g. Noch besser ist es allerdings, wenn das Polyäthylenterephthalat eine Intrinsic-Viskosität von etwa 0,5 bis etwa 0,7 dl/g aufweist.

In einer bevorzugten Ausbildung des erfindungsgemäßen Verfahrens wird das die Polyesterfolie bildende Polymer geschmolzen und dann auf eine polierte, rotierende Gießtrommel extrudiert, wodurch eine Vorfolie gebildet wird. Ansschließend wird die Folie zweiachsig gestreckt, d. h. sie wird in Längs- und in Querrichtung gestreckt. Der erste Streckvorgang der Vorfolie kann wahlweise in einer der orthogonalen Richtungen erfolgen. Der Streckgrad, der der Folie Festigkeit und Zähigkeit verleiht, kann in beiden Richtungen 3,0 bis 5,0 mal größer sein als die Abmaße der Vorfolie. Vorzugsweise liegt der Streckgrad bei 3,2 : 1 bis 4,2 : 1. Die Streckung wird bei Temperaturen durchgeführt, die zwischen dem Umwandlungspunkt zweiter Ordnung und unterhalb des Schmelzpunktes liegt.

Gegebenenfalls wird die Folie nach der Streckung solange thermobehandelt, bis sie kristallisiert.

In der bevorzugten Ausbildung, in der Polyäthylenterephthalat verwendet wird, wird der Folie durch die Kristallisierung stabilisiert. Wird ein Polyäthylenterephthalatfilm thermobehandelt, so wird er einer Temperatur ausgesetzt, die zwischen 190 °C und 240 °C, vorzugsweise zwischen 215 °C und 235 °C, liegt.

Die Latexbeschichtung, die der Folie antistatische Eigenschaften, gutes Verarbeitungsverhalten und

3

0 013 556

hohe Transparenz verleiht, wird bevorzugt erst dann aufgebracht, nachdem die Folie einachsig gestreckt wird. Bevorzugt wird die Polyesterfolie vor der Beschichtung erst in der Längsrichtung gestreckt. In dieser bevorzugten Ausführungsform wird die Folie nach der Längsstreckung durch eine der auf diesem Gebiet bekannten Techniken beschichtet.

So kann die Beschichtung z. B. mittels Walzen-, Sprüh-, Schlitz- und Immersionsvorrichtungen erfolgen. Bevorzugt wird die Polyesterfolie mit dem Latexüberzug durch Walzenantrag beschichtet.

Vorzugsweise wird die einachsig gestreckte Folie vor der Beschichtung mittels Coronaentladung vorbehandelt. Das heißt, die Folie wird vor der Beschichtung einer Coronaentladung in einer Coronaentladungsvorrichtung ausgesetzt. Die Coronabehandlung setzt den hydrophoben Charakter der Polyesterfolienoberfläche herab. Dadurch kann die wäßrige Letexbeschichtung die Oberfläche besser benetzen, wodurch die Adhäsion zwischen Beschichtung und Oberfläche verbessert wird.

Die auf die Polyesterfolie aufgebrachte Latexbeschichtung ist eine Dispersion von 2,75 bis 3,20 Gewichtsprozent Stearamido-Propyl-Dimethyl-$\beta$-Hydroxyäthyl-Ammonium-Nitrat, bezogen auf das Gesamtgewicht der Beschichtung. Bevorzugt liegt die Konzentration dieser Ammonium-Nitrat-Verbindung etwa zwischen 2,9 und 3,1 Gewichtsprozent, bezogen auf das Gesamtgewicht. In einer noch bevorzugteren Ausbildung beträgt die Konzentration der Ammonium-Nitrat-Verbindung etwa 3,0 Gewichtsprozent, bezogen auf das Gesamtgewicht.

Das Beschichtungsmittel enthält weiterhin ein vernetzbares Methyl-Methacrylat/Äthyl-Acrylat/Methacrylamid-Terpolymer in einer Konzentration von 0,85 bis 1,16 Gewichtsprozent, bezogen auf das Gesamtgewicht der Latexbeschichtung. Das Terpolymer ist weiterhin durch eine Glasübergangstemperatur von 40 °C bis 50 °C gekennzeichnet. Bevorzugt wird das Terpolymer in einer Konzentration von 0,9 bis 1,1 Gewichtsprozent, bezogen auf das Gesamtgewicht, eingesetzt. In einer noch weiter bevorzugten Ausführung ist das Terpolymer in einer Konzentration von 1,0 Gewichtsprozent, bezogen auf das Gesamtgewicht, vorhanden. Die Glasübergangstemperatur des Terpolymers liegt in einer bevorzugteren Ausbildung etwa zwischen 43 °C und 47 °C ; noch bevorzugter besitzt es eine Glasübergangstemperatur von etwa 45 °C.

Die zwei Bestandteile der Latexbeschichtung, das Stearamido-Propyl-Dimethyl-$\beta$-Hydroxyäthyl-Ammonium-Nitrat und das Methyl-Methacrylat/Äthyl-Acrylat/Methacrylamid-Terpolymer, stehen in einem Gewichtsverhältnis von 2,75 : 1 bis 3,20 : 1 zueinander. In einer bevorzugteren Ausbildung beträgt das Gewichtsverhältnis des Nitrats zum Terpolymer 2,75 : 1 bis 3,0 : 1.

Nach der Beschichtung und vor der Streckung wird die Folie durch Erwärmung bei einer Temperatur von 90 °C bis 110 °C getrocknet. Vorzugsweise liegt die Temperatur zwischen 95 °C und 105 °C.

In einer bevorzugten Ausbildung beträgt die Dicke der Beschichtung auf der biaxial gestreckten Polyesterfolie nach dem Trocknen mindestens 0,014 6 g pro m² (0,003 1b pro 1 000 square feet). Vorzugsweise beträgt das Trockengewicht 0,014 6 bis 0,032 g pro m² (0,003 bis 0,007 1b pro 1 000 square feet) beschichteter Folie.

In einer anderen bevorzugten Ausführung wird die antistatisch beschichtete Folie auf der anderen Seite mit einer vernetzbaren Acryl-Polymerschicht versehen. Die Acryl-Polymerschicht ist in einer bevorzugten Ausbildung ein vernetzbares Äthyl-Acrylat/Methyl-Methacrylat/Methacrylamid-Terpolymer. Die Beschichtung wird mit Melamin-Formaldehyd vernetzt. Vorzugsweise wird die Beschichtung in einer Walzenvorrichtung auf die einachsig gestreckte Polyesterfolie aufgebracht. Vorzugsweise wird eine Latexbeschichtung aufgetragen, in der die festen Bestandteile 3 bis 4 Gewichtsprozent ausmachen, der Rest von 96 bis 97 Gewichtsprozent besteht aus Wasser. Die Beschichtung auf der zweiten Seite dient als Verankerung für Acryl- und Cellulose-Lackbeschichtungen, wie sie gewöhnlich in der reprographischen Industrie verwendet werden.

Die nachfolgenden Beispiele werden zur Veranschaulichung der Erfindung aufgeführt. Der Inhalt der Beispiele soll jedoch keineswegs als Einschränkung des Zieles und Zwecks der in diesen Beispielen beschriebenen Erfindung angesehen werden.

Beispiel 1

Ein Polyäthylen-Terephthalat-Polymer wurde geschmolzen und durch eine Schlitzdüse auf eine Gießtrommel extrudiert, die eine Temperatur von etwa 20 °C hatte. Die Schmelze kühlte ab und bildete eine Vorfolie. Die Folie wurde längsgestreckt und zwar mit einem Streckverhältnis von 3,6 : 1 bei einer Temperatur von 80 °C.

Die längsgestreckte Folie wurde in einer Coronaentladungsvorrichtung coronabehandelt und dann mit einer Latexbeschichtung mit Hilfe einer Wendetiefdruckbeschichtungsmaschine beschichtet. Die auf die Polyesterfolienoberfläche aufgebrachte Latexbeschichtung enthielt 3 Gewichtsprozent Stearamido-Propyl-Dimethyl-$\beta$-Hydroxyäthyl-Ammonium-Nitrat, bezogen auf das Gesamtgewicht des Beschichtungsmittels und 1 Gewichtsprozent Methyl-Methacrylat/Äthyl-Acrylat/Methacrylamid-Terpolymer, bezogen auf des Gesamtgewicht. Das Terpolymer ist vernetzbar, weil Hexa-Methoxy-Methyl-Melamin, eine vernetzende Melamin-Formaldehyd-Substanz, vorhanden ist, und ist durch eine Glasübergangstemperatur von 45 °C gekennzeichnet. Der verbleibende Bestandteil, Wasser, hat in der Latexbeschichtung einen Gewichtsanteil von 96 %.

Das Beschichtungsmittel wird in einer ersten Stufe durch das Mischen von Stearamido-Propyl-

4

Dimethyl-β-Hydroxyäthyl-Ammonium-Nitrat und Wasser hergestellt. Diese Mischung wird dann mit dem Terpolymer gemischt. Die festen Bestandteile werden durch die üblichen Mischtechniken mit dem Wasser gemischt und bilden eine gleichmäßige Mischung.

Die mit einer Coronaentladung behandelte, längsgestreckte, beschichtete Folie wurde bei einer Temperatur von 100 °C getrocknet. Dann wurde die Folie quergestreckt und zwar mit einem Streckverhältnis von 3,6 : 1. Die zweiachsig gestreckte Folie wurde auf 230 °C erwärmt. Das Gewicht der endgültigen antistatischen Beschichtung liegt zwischen 0,014 6 und 0,032 g pro m² (0,003 bis 0,007 1b pro 1 000 square feet). Die Gesamtdicke der Folie beträgt etwa 76,2 μm (3 mil ; 0,003 inch).

## Beispiel 2

Mit Ausnahme der Zusammensetzung der Latexbeschichtung wurde ein Vergleichbeispiel in genau der gleichen Art wie in Beispiel 1 zur Herstellung einer 76,2 μm dicken (3 mil), zweiachsig ausgerichteten Polyäthylenterephthalat (im folgenden PET genannt) beschichteten Folie durchgeführt. In diesem Beispiel bestand die Beschichtung aus 1 Gewichtsprozent Stearamido-Propyl-Dimethyl-β-Hydroxyäthyl-Ammonium-Nitrat (im folgenden Nitrat genannt), bezogen auf das Gesamtgewicht des Beschichtungsmittels (im folgenden Prozent genannt) und außerdem aus 1 % vernetzbarem Methyl-Methacrylat/Äthyl-Acrylat/Methacrylamid-Terpolymer (im folgenden Terpolymer genannt) mit einer Glasübergangstemperatur von 45 °C, und aus 97 % Wasser.

## Beispiel 3

Ein anderes Vergleichsbespiel wurde auf genau die gleiche Weise wie Beispiel 1 zur Herstellung einer beschichteten Folie durchgeführt, ausgenommen, daß die Latexbeschichtung aus 3 % Nitrat, 3 % Terpolymer und 94 % Wasser bestand.

Proben der PET-beschichteten Folien, die gemäß den Bespielen 1 bis 3 hergestellt worden waren, wurden auf ihre Antistatik-, Reibungskoeffizient-, und Trübungseigenschaften geprüft.

Die Antistatikeigenschaft wurde durch eine qualitative Prüfung gemessen. Diese Prüfung, der sogenannte « Ascheaufnahme-Test », besteht darin, Streifen, welche Standardmaße haben, aus der Folie abzuschneiden, die Folie 6 mal über ein Baumwolltuch zu reiben und die geriebene Seite der Folie 2,54 cm (1 inch) über einen mit Zigarettenasche gefüllten Aschenbecher zu halten.

Folien mit ausgezeichneten antistatischen Eigenschaften bewegen die Asche nicht.

Wird die Asche im Aschenbecher bewegt, jedoch nicht auf die Folienoberfläche angezogen, so wird die Folie als gut eingestuft.

Eine Folie, die als ausreichend bezeichnet wird, bewirkt, daß die Asche bewegt wird, sich der Folienoberfläche nähert und in einem geringen Maße daran haften bleibt.

Eine Folie wird als schlecht eingestuft, wenn große Mengen an Asche auf die Folienoberfläche angezogen werden und daran haften bleiben.

Die Prüfung wird ein zweites Mal auf der gegenüberliegenden Folienseite durchgeführt. Die endgültige Klassifizierung erfolgt durch den schlechteren Wert, wenn die Prüfungsergebnisse verschieden sind.

Die Prüfung des Reibungskoeffizienten (COF), die der Festlegung der Gleitfähigkeit der Folie dient, wurde nach der Standardmethode gemäß ASTM D 1894-68 durchgeführt. Alle Folienproben, die gemäß diesem Test unterzogen wurden, wurden gemäß ASTM D 618, Verfahren A, präpariert.

Eine gute Gleitfähigkeit (oder Verarbeitungsfähigkeit) besitzen Folien, deren statischer und kinetischer Reibungskoeffizient zwischen 0,3 und 0,5 liegt. Unter 0,2 ist die Gleitfähigkeit zu groß ; Folien mit einem solchen Reibungskoeffizienten teleskopieren. Sie lassen sich nur schwer aufwickeln und werden deshalb als nicht zufriedenstellend eingestuft. Über 0,5 ist die Gleitfähigkeit unzulänglich ; Folien mit einem höheren Reibungskoeffizienten als 0,5 neigen zum Blocken. In diesem Fall gleitet die Folie überhaupt nich mehr über eine Oberfläche mit der sie in Berührung ist.

Der Trübungstest, die beste Angabe über die Folientransparenz, wird durch die ASTM-Testmethode D 1003-61, Verfahren A, Abschnitt 7, festgelegt.

Eine Trübung für eine 76,2 μm (3 mil) starke PET-beschichtete Folie, die einen Wert von 1,2 % oder noch niedrigere Werte hat, kann als annehmbar bezeichnet werden. Je niedriger der Trübungsprozentsatz ist, umso klarer ist die Folie. Eine Trübung von mehr als 1,2 % ist nicht annehmbar.

Zusätzlich wurde zwischen beständiger und nicht beständiger Latexbeschichtung unterschieden. Eine beständige Latexbeschichtung ist eine Beschichtung, die während mindestens einer Woche ihren Emulsionszustand wahrt. Eine nicht beständige Latexbeschichtung ist eine Beschichtung, die sich in ein Zwei-Phasen-System auftrennt.

Leider ergab es sich, daß das in den Beispielen 1 bis 3 verwendete PET-Polymer verunreinigt wurde. Deshalb sind die Angaben über die Trübung für diese Beispiele nicht unbedingt aussagekräftig.

Die Prüfungen der Folien gemäß den Beispielen 1 bis 3 sind in Tabelle I zusammengefaßt.

(Siehe Tabelle I Seite 6 f.)

Tabelle I

| Beispiel Nr. | Trübung % | COF | | Antistatikeigenschaften/ Ascheaufnahmetest | | Latexbe- beständig- keit |
|---|---|---|---|---|---|---|
| | | statisch | kinetisch | 50 % | RH | |
| 1 | 2,5 | C/C 0,21 | 0,23 | gut | ausgez. (40 %) | beständig |
| | | C/U 0,23 | 0,27 | | | |
| 2 | 2,5 | C/C 0,33 | 0,35 | gut | ausgez. (45 %) | beständig |
| | | C/U 0,36 | 0,37 | | | |
| 3 | 2,3 | C/C 0,65 | 0,43 | gut | schlecht (42 %) | beständig |
| | | C/U 0,87 | 0,45 | | | |

Anmerkung 1 : C = antistatisch beschichtete Seite
U = unbeschichtete Seite
Anmerkung 2 : Die Nummer in dieser und den weiteren Tabellen bezieht sich auf die Folie, wie sie gemäß der Beispielnummer in dieser Beschreibung hergestellt wurde.
Anmerkung 3 : Der in Klammern angegebene Prozentsatz gibt die relative Luftfeuchtigkeit in Prozent an, bei welcher der Ascheaufnahmetest durchgeführt wurde.

Die oben angeführten Resultate zeigen, daß Beispiel 1, d. h., die gemäß dieser Erfindung hergestelle Folie, ausgezeichnete antistatische Eigenschaften, selbst bei 40 % relativer Luftfeuchtigkeit, noch annehmbare Gleitfähigkeit und gute Latexbeständigkeit aufwies.

Die nach Beispiel 3 hergestellte Folie, in der das Nitrat zu 1 % und das Terpolymer zu 3 % im Beschichtungsmittel vorhanden war, hatte unzulängliche antistatische Eigenschaften. Deshalb ist in diesem Zusammenhang festzustellen, daß, obwohl der Ascheaufnahmetest bei 50 % relativer Luftfeuchtigkeit noch gut war, der gleiche Test bei einer geringeren relativen Luftfeuchtigkeit, nämlich bei 42 %, die Unzulänglichkeit dieser Beschichtung zeigt.

Die nach Beispiel 2 hergestellte Folie hatte nur bis 45 % relativer Luftfeuchtigkeit gute antistatische Eigenschaften.

Je niedriger die relative Luftfeuchtigkeit ist, umso ausgeprägter ist die Neigung der Polyesterfolie sich statisch aufzuladen und umso strenger muß die Überprüfung der Wirksamkeit der antistatischen Beschichtung durchgeführt werden. Jede Messung der relativen Luftfeuchtigkeit wurde bei Temperaturen von etwa 22 °C bis 23 °C (72 °F bis 74 °F) durchgeführt.

## Beispiel 4

Beispiel 1 wurde wiederholt, ausgenommen daß die Seite gegenüber der antistatisch beschichteten Folienseite mit einer Latexbeschichtung versehen wurde, die aus 3 % Methyl-Methacrylat/Äthyl-Acrylat/Methacrylamid-Terpolymer, welches mit Hexa-Methoxy-Methyl-Melamin vernetzt wurde, und aus 97 % Wasser bestand. Die Beschichtung wurde durch eine Wendetiefdruckwalze auf die längsgestreckte PET-beschichtete Folie aufgebracht und zur gleichen Zeit und auf gleiche Weise wie die antistatische Beschichtung auf der anderen Seite getrocknet. Das sich daraus ergebende Produkt war eine zweiachsig gestreckte 76,2 $\mu$m (3 mil) dicke, PET-beschichtete Folie, die auf einer Seite mit der in Beispiel 1 beschriebenen antistatischen Beschichtung und auf der anderen Seite mit der oben beschriebenen vernetzten Acrylbeschichtung beschichtet war. Das Trockengewicht der vernetzten Acrylbeschichtung lag zwischen 0,014 6 und 0,032 g pro m² (0,003 und 0,007 1b pro 1 000 square feet).

## Beispiele 5 bis 6

Zwei Vergleichsbeispiele wurden in gleicher Weise wie Beispiel durchgeführt, ausgenommen daß der antistatische Überzug aus verschiedene Latexbeschichtungen erfolgte. In Beispiel 5 bestand die Latexbeschichtung aus 2 % Nitrat, 1 % Terpolymer und 97 % Wasser. In Beispiel 6 bestand die Latexbeschichtung aus 3 % Nitrat, 2 % Terpolymer und 95 % Wasser. Man erhielt beschichtete, zweiachsig gestreckte Folien, die sich von der Folie gemäß Beispiel 4 nur durch die unterschiedlichen Konzentrationen der Bestandteile der antistatischen Beschichtung unterschieden.

Die Folien, die gemäß dem Beispiel 4 bis 6 hergestellt worden waren, wurden auf ihre Antistatik-, Gleit- und Transparenzeigenschaften durch die gleichen Prüfungsverfahren wie bereits beschrieben geprüft. Die Ergebnisse sind in Tabelle II zusammengefaßt :

(Siehe Tabelle II Seite 7 f.)

Tabelle II

| Beispiel Nr. | Trübung % | COF | | Antistatikeigenschaften/ Ascheaufnahmetest | | Latexbeständigkeit |
|---|---|---|---|---|---|---|
| | | statisch | kinetisch | 50 % | 41 % RH | |
| 4 | 1,2 | A/A 0,43 | 0,44 | | | |
| | | B/B 0,23 | 0,25 | gut | gut | gut |
| | | A/B 0,29 | 0,32 | | | |
| 5 | nicht gemessen | nicht gemessen | | ausreichend | schlecht | gut |
| 6 | 1,2 | A/A 0,48 | 0,48 | | | |
| | | B/B 0,23 | 0,27 | gut | gut | schlecht |
| | | A/B 0,31 | 0,35 | | | |

Anmerkung : A = acrylbeschichtete Seite
B = antistatisch beschichtete Seite

Es ist festzustellen, daß die gemäß dieser Erfindung hergestellte Folie in allen Hinsichten annehmbar war. Die in Beispiel 5 hergestellte Folie, die einen Nitratspiegel aufwies, der über den Rahmen dieser Erfindung hinausging, hatte unannehmbare Antistatikeigenschaften und wurde deshalb nicht auf ihre Transparenz und Gleitfähigkeit untersucht. Die gemäß Beispiel 6 hergestellte Folie war zwar durchaus annehmbar, jedoch besaß die Latexbeschichtung keine Beständigkeit während einer Woche.

Beispiel 7

Eine 76,2 μm (3 mil) dicke, zweiachsig gestreckte PET-beschichtete Folie wurde genau gemäß dem Verfahren und den Beschichtungen, die in Beispiel 4 verwendet wurden, hergestellt, d. h. die antistatische Latexbeschichtung bestand aus 3 % Nitrat, 1 % Terpolymer und 96 % Wasser.

Beispiele 8 bis 9

Zwei zusätzliche Vergleichsbeispiele wurden mit Ausnahme der Zusammensetzung der antistatischen Latexbeschichtung genauso wie das in Beispiel 7 verwendete Verfahren ausgeführt. Die Folie, die gemäß Beispiel 8 hergestellt wurde, enthielt 3 % Nitrat und 2 % Terpolymer (wie in Beispiel 6). Die Folie, die gemäß Beispiel 9 hergestellt wurde, enthielt 4 % Nitrat und 1 % Terpolymer.

Die gemäß den Beispielen 7 bis 9 hergestellten Folien wurden gemäß den bereits beschriebenen Verfahren geprüft.

Zusätzlich wurde eine noch stärker quantitativ ausgerichtete Prüfung zur Festlegung der Antistatikeigenschaft der Folie durchgeführt. Diese Prüfung bestand in der Messung des spezifischen Oberflächenwiderstandes der Folie. Das zur Messung dieses Wertes verwendete Verfahren ist im ASTM-Test D 257-66 beschrieben.

Ein spezifischer Oberflächenwiderstand von $10^{10}$ Ω oder weniger stellt eine Folie mit guten antistatischen Eigenschaften dar. Ein spezifischer Oberflächenwiderstand der größer als $10^{11}$ Ω ist, wird als unzulänglich eingestuft.

Die Ergebnisse dieser Prüfung werden in der nachfolgenden Tabelle III aufgeführt :

(Siehe Tabelle III Seite 8 f.)

Tabelle III

| Beispiel Nr. | Trübung % | COF | | Antistatikeigenschaften/ Ascheaufnahmetest | | Spez. Oberflächen-widerstand Ω | Latex-beständigkeit |
|---|---|---|---|---|---|---|---|
| | | statisch | kinetisch | 36,5 % RH | 50 % RH | | |
| 7 | 0,94 | A/A 0,45 | 0,48 | | | | nicht |
| | | B/B 0,36 | 0,40 | ausgez. | ausgez. | $4,7 \times 10^{10}$ | geprüft |
| | | A/B 0,31 | 0,42 | | | | |
| 8 | 1,04 | A/A 0,47 | 0,47 | | | | |
| | | B/B 0,29 | 0,31 | schlecht | ausgez. | $1,2 \times 10^{11}$ | gut |
| | | A/B 0,33 | 0,33 | | | | |
| 9 | 1,10 | A/A 0,48 | 0,48 | | | | |
| | | B/B Block. | Block. | ausgez. | gut | $4,2 \times 10^{10}$ | gut |
| | | A/B 0,38 | 0,71 | | | | |

Anmerkung 1 : A = acrylbeschichtete Seite
B = antistatisch beschichtete Seite
Anmerkung 2 : Die in Beispiel 9 verwendete Latexbeschichtung ging verloren und konnte deshalb nicht geprüft werden
Anmerkung 3 : Alle Ascheaufnahmetests wurden bei 23 °C (74 °F) durchgeführt
Anmerkung 4 : Der spezifische Oberflächenwiderstand wurde in einem Raum bei 25 °C (78 °F) und einer relativen Luftfeuchtigkeit von 32 bis 36 % gemessen
Anmerkung 5 : Der ermittelte spezifische Oberflächenwiderstand ist der Durchschnittswert zweier Messungen der antistatisch beschichteten Seite

Die oben angeführten Resultate bestätigen die ausgezeichneten Ergebnisse, für die gemäß Beispiel 7 erfindungsgemäß hergestellte Folie.

Die gemäß dem Beispiel 8 hergestellte Vergleichsfolie wies unannehmbare antistatische charakteristika auf. Die Ascheaufnahme bei 36,5 % relativer Luftfeuchtigkeit war jedoch auf der acrylbeschichteten Seite unannehmbar. Es ist festzustellen, daß die Angabe über den spezifischen Oberflächenwiderstand die Schlußfolgerung bestätigt, die sich aus dem Ascheaufnahmetest ergab. Es ist festzustellen, daß der Ascheaufnahmetest bei 36,5 % relativer Luftfeuchtigkeit auf der antistatisch beschichteten Seite als gut eingestuft wurde. Wie oben erwähnt wurde, ist die ermittelte Klassifizierung der untere der beiden Werte für die Messungen der zwei Seiten der Folie.

Die gemäß Beispiel 9 hergestellte Folie war unannehmbar aufgrund ihrer ungenügenden Gleiteigenschaften.

Beispiele 10 bis 12

Es wurde eine reihe von Versuchen durchgeführt, um die Wirksamkeit einer Beschichtung festzulegen, die derjenigen Beschichtung ähnelt, die in der U.S.-Patentschrift 3,264,136 beschrieben ist. In dieser Patent-schrift wird eine PET-beschichtete Folie als Beispiel angeführt, welche mit einer Beschichtungsdispersion beschichtet ist, die aus 0,14 Gewichtsprozent Polymethyl-Methacrylat und 0,2 Vol-Prozent Stearamido-Propyl-Dimethyl-β-Hydroxyäthyl-Ammonium-Nitrat besteht, d. h., die gleiche Komponente wie diejenige, die in dieser Erfindung verwendet wird und die in den Beispielen als « Nitrat » bezeichnet wird. Eine Volumenkonzentration von 0,2 % entspricht in etwa einer Gewichtskonzentration, die zwischen 0,2 und 0,3 % liegt, da das spezifische Gewicht des Nitrats fast 1 ist.

Zur Festlegung der Wirksamkeit der oben beschriebenen Beschichtungszusammensetzung wurde Beispiel 10 gemäß dem Verfahren, das in Beispiel 1 beschrieben wurde durchgeführt.

Gleichzeitig wurde eine andere Latexbeschichtung, die aus 0,5 Gewichtsprozent Polymethyl-Methacrylat, bezogen auf das Gesamtgewicht der Zusammensetzung, und 0,5 % Nitrat besteht, zur Herstellung einer zweiachsig gestreckten 76,2 μm (3 mil) dicken, PET-beschichteten Folie verwendet. Beispiel 11 unterscheidet sich von Beispiel 10 nur dadurch, daß eine andere Beschichtung gewählt wurde.

Eine dritte Beschichtungszusammensetzung wurde zur Herstellung einer weiteren PET-beschichteten Folie verwendet. Eine Folie wurde gemäß Beispiel 12 nach dem gleichen Verfahren wie in den Beispielen 10 und 11 hergestellt, ausgenommen, daß die Latexbeschichtung aus 1 % Polymethyl-Methacrylat, 3 % Nitrat und 96 % Wasser bestand.

Die Folien, die gemäß den Beispielen 10 bis 12 hergestellt wurden, wurden sowohl auf ihre Antistatik-Gleit- und trübungseigenschaften als auch auf Beständigkeit des Beschichtungsmittels geprüft. Die Ergebnisse dieser Prüfungsverfahren sind in Tabelle IV zusammengefaßt :

Tabelle IV

| Beispiel Nr. | Trübung % | COF statisch | COF kinetisch | Antistatikeigenschaften/ Ascheaufnahmetest 40 % RH, 25-26 °C (78-79 °F) | Latex- beständig- keit |
|---|---|---|---|---|---|
| 10 | 0,94 | C/C 0,73 C/U block. | 0,58 block. | gut | gut |
| 11 | 0,74 | C/C 0,37 C/U 0,34 | 0,40 0,39 | schlecht | schlecht |
| 12 | 1,62 | C/C 0,28 C/U 0,24 | 0,82 0,45 | gut | schlecht |

Anmerkung : C = antistatisch beschichtete Seite
U = unbeschichtete Seite

Wie die Ergebnisse der Tabelle zeigen, wies die Folie in Beispiel 10 schlechte Gleiteigenschaften auf. In allen anderen Hinsichten waren die Folie und die Beständigkeit des Beschichtungsmittels annehmbar.

Beispiel 11 zeigt die Unannehmbarkeit einer Latexbeschichtung mit einem Nitratgewichtsanteil von nur 0,5 %, selbst wenn Polymethyl-Methacrylat als zweite Komponente verwendet wird. Wie der Ascheaufnahmetest zeigt, sind die antistatischen Eigenschaften dieser Beschichtung, selbst bei Verwendung einer höheren Nitratkonzentration als in der U.S.-Patentschrift 3,264,136 vorgeschlagen wird, unannehmbar. Und dies obwohl die Konzentration des Polymethyl-Methacrylats ebenso ähnlich erhöht wurde, wie sie gemäß der vorliegenden Erfindung für das Terpolymere verwendet wird.

Beispiel 12 zeigt, daß die Verwendung von Polymethyl-Methacrylat anstatt des Terpolymers nicht ausreichend ist. Die Transparenz und die Gleiteigenschaft dieser Folie ist unannehmbar.

Es muß auch betont werden, daß die Latexbeschichtung, in der Polymethyl-Methacrylat verwendet wird, wegen der Unbeständigkeit des Beschichtungsmittels unannehmbar ist. Die Latexbeschichtungen aus Beispiel 11 (0,5 % Polymethyl-Methacrylat) und aus Beispiel 12 (1,0 % Polymethyl-Methacrylat) zeigten beide innerhalb einer Woche Phasentrennung.

Beispiele 13 bis 18

Es wurden sechs Versuche durchgeführt, um den Einfluß des Gewichtsverhältnisses des Nitrats im Vergleich zum Terpolymer zu bestimmen. Es wurden entsprechend zweiachsig gestreckte PET-beschichtete Folien gemäß dem in Beispiel 1 angeführten Verfahren hergestellt, wobei jedoch die Zusammensetzung der antistatischen Latexbeschichtung differierte. In jedem der sechs Beispiele enthielt das Beschichtungsmittel 1 Gewichtsprozent Terpolymer, jedoch verschiedene Nitratkonzentrationen. Die Latexbeschichtung in Beispiel 13 enthielt 2 Gewichtsprozent Nitrat ; in jedem weiteren Beispiel wurde die Nitratkonzentration um 0,25 % erhöht, so daß die Beschichtung in Beispiel 18 3,25 % Nitrat enthielt. Somit änderte sich das Verhältnis von Nitrat zu Terpolymer von 2,00 in Beispiel 13 auf 3,25 % in Beispiel 18. Hierbei ist festzuhalten, daß die der beschichteten Seite entgegenliegende Seite unbeschichtet blieb.

Die gemäß den Beispielen 13 bis 18 herstellen Proben wurden geprüft, um die Antistatik-, Gleit- und Transparenzeigenschaften der einseitig beschichteten, 76,2 µm (3 mil) dicken, zweiachsig gestreckten PET-Folie festzustellen. Die Trübungswerte aller Folien waren in allen Fällen annehmbar.

Der Ascheaufnahmetest aller Proben wurde bei 37 % relativer Luftfeuchtigkeit und bei 25 °C bis 26 °C (78 bis 79 °F) durchgeführt und als gut bewertet. Außerdem war die Latexbeständigkeit für alle Beschichtungsproßen, die in diesem Prüfungsverfahren verwendet wurden, zufriedenstellend. Die restlichen Ergebnisse, die in einer Wiederholung des Ascheaufnahmetests bei geringerer Luftfeuchtigkeit bestanden, sind in der nachstehenden Tabelle V aufgeführt :

Tabelle V

| Beispiel Nr. | Verhältnis Nitrat/Terpolymer | Antistatikeigenschaften/ Ascheaufnahmetest | bei % RH | COF statisch | COF kinetisch |
|---|---|---|---|---|---|
| 13 | 2,00 | schlecht | 31,5 | C/C 0,30 C/U 0,33 | 0,26 0,42 |
| 14 | 2,25 | schlecht | 31,5 | C/C 0,25 C/U 0,33 | 0,27 0,44 |
| 15 | 2,50 | gut schlecht | 31,5 31,0 | C/C 0,27 C/U 0,35 | 0,32 0,44 |

9

# 0 013 556

Tabelle V (Fortsetzung)

| Beispiel Nr. | Verhältnis Nitrat/Terpolymer | Antistatikeigenschaften/ Ascheaufnahmetest | bei % RH | COF statisch | kinetisch |
|---|---|---|---|---|---|
| 16 | 2,75 | gut | 31,5 | C/C 0,31 | 0,37 |
| | | gut | 31,0 | C/U 0,33 | 1,24 |
| 17 | 3,00 | gut | 31,5 | C/C 0,37 | 0,48 |
| | | gut | 31,0 | C/U 0,30 | 0,80 |
| 18 | 3,25 | gut | 31,5 | C/C block. | block. |
| | | gut | 31,0 | C/U block. | block. |

Anmerkung 1 : Ascheaufnahme bei 24 °C (76 °F)
Anmerkung 2 : C = antistatisch beschichtete Seite
U = unbeschichtete Seite

Die bei 31,0 bzw. 31,5 relativer Luftfeuchtigkeit durchgeführten Messungen beim Ascheaufnahmetest zeigten, daß für die Antistatikeigenschaften der Folie annehmbare Ergebnisse erzielt wurden, wenn das Nitrat-Terpolymer-Gewichtsverhältnis zwischen 2,75 und 3,20 lag. Niedrigere Anteile führten zu unannehmbaren Antistatikeigenschaften.

Die Gleiteigenschaften aller Folien, die in den Beispielen 13 bis 18 hergestellt wurden, waren im großen und ganzen, mit Ausnahme von Beispiel 18, annehmbar.

Beispiele 19 bis 24

Die für die Folien der Beispiele 13 bis 18 beschriebene Prüfung wurde gemäß dem vorher beschriebenen Verfahren mit einer leichten Abänderung wiederholt. D. h. die Prüfung der Folien nach den Beispielen 13 bis 18 wurde für den Fall wiederholt, wo die der antistatisch beschichteten Seite gegenüberliegende Seite mit der in Beispiel 4 beschriebenen vernetzten Acrylbeschichtung beschichtet wurde. Die Beschichtungskonzentration der vernetzbaren Acrylbeschichtung betrug jedoch 3,2 Gewichtsprozent, bezogen auf das Gesamtgewicht der Latexzusammensetzung.

Die gemäß den Beispielen 19 bis 24 verwendeten Folien wurden auf die bei den Beispielen 13 bis 18 geprüften Eigenschaften getestet. In allen Beispielen wurden annehmbare Trübungswerte erzielt. Zusätzlich wurde die Latexbeständigkeit als gut bewertet. Genauso wie in den Beispielen 13 bis 18 war der Ascheaufnahmetest bei 37 % relativer Luftfeuchtigkeit und 25 °C (78 °F) in allen Fällen annehmbar, ebenso wie bei einer relativen Luftfeuchtigkeit von 31 %.

Die Ergebnisse sind in Tabelle VI zusammengefaßt :

Tabelle VI

| Beispiel Nr. | Gewichtsverhältnis Nitrat/Terpolymer | Antistatikeigenschaften/ Ascheaufnahmetest | COF statisch | kinetisch |
|---|---|---|---|---|
| 19 | 2,00 | schlecht | A/A 0,41 | 0,43 |
| | | | B/B 0,24 | 0,28 |
| | | | A/B 0,33 | 0,38 |
| 20 | 2,25 | schlecht | A/A 0,41 | 0,41 |
| | | | B/B 0,27 | 0,31 |
| | | | A/B 0,28 | 0,33 |
| 21 | 2,50 | schlecht | A/A 0,45 | 0,47 |
| | | | B/B 0,29 | 0,33 |
| | | | A/B 0,28 | 0,46 |
| 22 | 2,75 | gut | A/A 0,43 | 0,44 |
| | | | B/B 0,30 | 0,38 |
| | | | A/B 0,30 | 0,40 |
| 23 | 3,00 | gut | A/A 0,43 | 0,48 |
| | | | B/B 0,41 | 0,46 |
| | | | A/B 0,26 | 0,64 |

10

Tabelle VI (Fortsetzung)

| Beispiel Nr. | Gewichtsverhältnis Nitrat/Terpolymer | Antistatikeigenschaften/ Ascheaufnahmetest | COF statisch | kinetisch |
|---|---|---|---|---|
| 24 | 3,25 | gut | A/A 0,44 | 0,48 |
|  |  |  | B/B 0,68 | 0,78 |
|  |  |  | A/B 0,32 | 0,86 |

Anmerkung 1 : Die Ascheaufnahme wurde bei 31 % relativer Luftfeuchtigkeit und bei 24 °C (76 °F) durchgeführt
Anmerkung 2 : In allen Fällen betrug die Terpolymerkonzentration in dem Beschichtungsmittel, bezogen auf das Gesamtgewicht, 1 Gewichtsprozent
Anmerkung 3 : A = acrylbeschichtete Seite
Anmerkung 4 : B = antistatisch beschichtete Seite

Die oben angeführten Ergebnisse stimmen insoweit mit den Ergebnissen aus den Beispielen 13 bis 18 überein, soweit die antistatischen Charakteristika (Ascheaufnahme) betroffen sind. Die Gleiteigenschaften aller Proben, mit Ausnahme der aus Beispiel 24, waren annehmbar.

**Ansprüche**

1. Biaxial gestreckte Polyesterfolie, die einseitig eine antistatische Beschichtung aufweist, die Stearamido-Propyl-Dimethyl-β-Hydroxyethyl-Ammonium-Nitrat und ein Polymeres enthält, dadurch gekennzeichnet, daß eine Latexbeschichtung aus einem Beschichtungsmittel aufgebracht wird, die

a) 2,75 bis 3,20 Gewichtsprozent Stearamido-Propyl-Dimethyl-β-Hydroxyethyl-Ammonium-Nitrat und

b) 0,85 bis 1,16 Gewichtsprozent vernetzbares Methyl-Methacrylat/Ethyl-Acrylat/Methacrylamid-Terpolymer mit einer Glasübergangstemperatur von 40 bis 50 °C enthält,

wobei die Verhältnisse von a : b zwischen 2,75 : 1 und 3,20 : 1 liegen.

2. Folie nach Anspruch 1, dadurch gekennzeichnet, daß die Beschichtungsstärke mindestens 0,014 6 g/m² (0,003 1b/1 000 square feet) beträgt.

3. Folie nach einem der Ansprüche 1 oder 2, dadurch gekennzeichnet, daß die Beschichtungsstärke zwischen 0,014 6 g/m² und 0,032 g/m² (0,003 1b und 0,007 1b/1 000 square feet) liegt.

4. Folie nach einem der Ansprüche 1 bis 3, dadurch gekennzeichnet, daß die Polyesterfolie aus Polyäthylenterephthalat besteht.

5. Folie nach einem der Ansprüche 1 bis 4, dadurch gekennzeichnet, daß die Komponente a) im Beschichtungsmittel in einer Menge von 2,9 bis 3,1 Gewichtsprozent, vorzugsweise in einer Menge von 3,0 Gewichtsprozent, vorhanden ist.

6. Folie nach einem der Ansprüche 1 bis 5, dadurch gekennzeichnet, daß die Komponente b) im Beschichtungsmittel in einer Menge von 0,9 bis 1,1 Gewichtsprozent, vorzugsweise in einer Menge von 1,0 Gewichtsprozent, vorhanden ist.

7. Folie nach einem der Ansprüche 1 bis 6, dadurch gekennzeichnet, daß das Terpolymer b) eine Glasübergangstemperatur von 43 bis 47 °C, vorzugsweise von 45 °C, aufweist.

8. Folie nach einem der Ansprüche 1 bis 7, dadurch gekennzeichnet, daß sie auf der zweiten Seite mit einer Schicht aus der Komponente b) versehen ist, wobei das Beschichtungsmittel 3,0 bis 4,0 Gewichtsprozent der Komponente enthält.

9. Verfahren zur Herstellung einer Folie nach den Ansprüchen 1 bis 8, dadurch gekennzeichnet, daß man die Beschichtung nach dem ersten Streckschritt vornimmt, nach der Beschichtung die Folie auf eine Temperatur zwischen 90 und 110 °C bringt und die Beschichtung trocknet und anschließend die Folie in der orthogonalen Richtung zur ersten Streckrichtung streckt.

10. Verfahren nach Anspruch 9, dadurch gekennzeichnet, daß man eine Polyäthylenterephthalatfolie beschichtet.

11. Verfahren nach einem der Ansprüche 9 oder 10, dadurch gekennzeichnet, daß man die biaxial gestreckte Folie auf 190 bis 240 °C erhitzt.

12. Verfahren nach einem der Ansprüche 9 bis 11, dadurch gekennzeichnet, daß man die Beschichtung im Walzenverfahren anbringt.

13. Verfahren nach Anspruch 12, dadurch gekennzeichnet, daß man die Beschichtung im Wendetiefdruckverfahren anbringt.

14. Verfahren nach einem der Ansprüche 9 bis 13, dadurch gekennzeichnet, daß man eine längsgestreckte Folie beschichtet.

15. Verfahren nach einem der Ansprüche 9 bis 14, dadurch gekennzeichnet, daß man die Folie auf der zweiten Seite mit einem Beschichtungsmittel beschichtet, das 3,0 bis 4,0 Gew.-% Methyl-Methacrylat/Äthylacrylat/Methacrylamid-Terpolymer mit einer Glasübergangstemperatur von 40 bis 50 °C enthält.

16. Verfahren nach einem der Ansprüche 9 bis 15, dadurch gekennzeichnet, daß man die einachsig gestreckte Folie vor der Beschichtung einer Coronaentladung unterwirft.

17. Verfahren nach Anspruch 16, dadurch gekennzeichnet, daß man eine längsgestreckte Folie der Coronaentladung unterwirft.

## Claims

1. Biaxially stretched polyester film having an antistatic coating applied to one side thereof and including stearamidopropyldimethyl-β-hydroxyethyl-ammonium nitrate and a polymer, wherein a latex coating formed of a coating agent is applied, which comprises

a) from 2.75 % to 3.20 % by weight of stearamidopropyldimethyl-β-hydroxyethyl-ammonium nitrate and

b) from 0.85 % to 1.16 % by weight of a crosslinkable methylmethacrylateethylacrylate-methacrylamide terpolymer, having a glass transition temperature in the range from 40° to 50 °C,

the ratios of a : b being in the range between 2.75 : 1 and 3.20 : 1.

2. A film as claimed in claim 1, wherein the coating weight is at least 0.014 6 g/m² (0.003 pound per 1 000 square feet).

3. A film as claimed in any of claims 1 or 2, wherein the coating weight is in the range between 0.014 6 g/m² and 0.032 g/m² (0.003 and 0.007 pound per 1 000 square feet).

4. A film as claimed in any of claims 1 to 3, wherein the polyester film comprises polyethylene terephthalate.

5. A film as claimed in any of claims 1 to 4, wherein component a) is present in the coating agent in a quantity ranging from 2.9 % to 3.1 % by weight, preferably in a quantity of 3.0 % by weight.

6. A film as claimed in any of claims 1 to 5, wherein component b) is present in the coating agent in a quantity ranging from 0.9 % to 1.1 % by weight, preferably in a quantity of 1 % by weight.

7. A film as claimed in any of claims 1 to 6, wherein the terpolymer b) has a glass transition temperature in the range from 43° to 47 °C, preferably of 45 °C.

8. A film as claimed in any of claims 1 to 7, wherein the second side of the film is coated with a layer comprising component b), the coating agent containing from 3.0 % to 4.0 % by weight of said component.

9. Process for manufacturing a film as claimed in claims 1 to 8, wherein coating is effected after the first stretching stage, the coated film is heated to a temperature in the range between 90° and 110 °C and the coating is dried, and the film is then stretched in a direction normal to the first direction of stretching.

10. A process as claimed in claim 9, wherein a polyethylene terephthalate film is coated.

11. A process as claimed in any of claims 9 or 10, wherein the biaxially stretched film is heated to a temperature in the range from 190° to 240 °C.

12. A process as claimed in any of claims 9 to 11, wherein the coating is applied by roller coating.

13. A process as claimed in claim 12, wherein the coating is applied by reverse gravure coating.

14. A process as claimed in any of claims 9 to 13, wherein a longitudinally stretched film is coated.

15. A process as claimed in any of claims 9 to 14, wherein the second side of the film is coated with a coating agent containing from 3.0 % to 4.0 % by weight of a methylmethacrylate-ethyl acrylatemethacrylamide terpolymer, having a glass transition temperature in the range from 40° to 50 °C.

16. A process as claimed in any of claims 9 to 15, wherein the uniaxially stretched film is subjected to a corona discharge prior to coating.

17. A process as claimed in claim 16, wherein a longitudinally stretched film is subjected to the corona discharge.

## Revendications

1. Feuille de polyester étirée biaxialement, qui présente sur un côté un revêtement antistatique qui contient du nitrate de stéaramido-propyl-diméthyl-β-hydroxy-éthyl-ammonium et un polymère, caractérisée en ce qu'un revêtement de latex est appliqué à partir d'un agent de revêtement qui contient

a) 2,75 à 3,20 % en poids de nitrate de stéaramido-propyl-diméthyl-β-hydroxyéthylammonium et

b) 0,85 à 1,16 % en poids d'un terpolymère méthacrylate de méthyle/acrylate d'éthyle/méthacrylamide réticulable ayant une température de transition vitreuse de 40 à 50 °C,

les rapports de a : b étant entre 2,75 : 1 et 3,20 : 1.

2. Feuille suivant la revendication 1, caractérisée en ce que la quantité de revêtement déposée est d'au moins 0,014 6 g/m².

3. Feuille suivant l'une des revendications 1 ou 2, caractérisée en ce que la quantité de revêtement déposée est entre 0,014 6 g/m² et 0,032 g/m².

4. Feuille suivant l'une des revendications 1 à 3, caractérisée en ce que la feuille de polyester est constituée de téréphtalate de polyéthylène.

5. Feuille suivant l'une des revendications 1 à 4, caractérisée en ce que le constituant a) est présent dans l'agent de revêtement en une quantité de 2,9 à 3,1 % en poids, de préférence en une quantité de 3,0 % en poids.

6. Feuille suivant l'une des revendications 1 à 5, caractérisée en ce que le constituant b) est présent dans l'agent de revêtement en une quantité de 0,9 à 1,1 % en poids, de préférence en une quantité de 1,0 % en poids.

7. Feuille suivant l'une des revendications 1 à 6, caractérisée en ce que le terpolymère b) présente une température de transition vitreuse de 43 à 47 °C, de préférence de 45 °C.

8. Feuille suivant l'une des revendications 1 à 7, caractérisée en ce qu'elle est munie sur le second côté d'une couche du constituant b), l'agent de revêtement contenant de 3,0 à 4,0 % en poids du constituant.

9. Procédé de fabrication d'une feuille suivant les revendications 1 à 8, caractérisé en ce qu'on effectue l'enduction après le premier stade d'étirage, en ce qu'après l'enduction, on porte la feuille à une température entre 90 et 110 °C et on sèche le revêtement puis en ce qu'on étire la feuille dans la direction perpendiculaire à la première direction d'étirage.

10. Procédé suivant la revendication 9, caractérisé en ce qu'on enduit une feuille de téréphtalate de polyéthylène.

11. Procédé suivant l'une des revendications 9 ou 10, caractérisé en ce qu'on chauffe la feuille étirée biaxialement de 190 à 240 °C.

12. Procédé suivant l'une des revendications 9 à 11, caractérisé en ce qu'on applique le revêtement par un procédé au rouleau.

13. Procédé suivant la revendication 12, caractérisé en ce qu'on applique le revêtement par un procédé d'héliogravure à inversion.

14. Procédé suivant l'une des revendications 9 à 13, caractérisé en ce qu'on enduit une feuille étirée longitudinalement.

15. Procédé suivant l'une des revendications 9 à 14, caractérisé en ce qu'on enduit la feuille sur le second côté avec un agent de revêtement qui contient de 3,0 à 4,0 % en poids d'un terpolymère méthacrylate de méthyle/acrylate d'éthyle/méthacrylamide ayant une température de transition vitreuse de 40 à 50 °C.

16. Procédé suivant l'une des revendications 9 à 15, caractérisé en ce qu'on soumet la feuille étirée uniaxialement, avant l'enduction, à une décharge couronne.

17. Procédé suivant la revendication 16, caractérisé en ce qu'on soumet une feuille étirée longitudinalement à la décharge couronne.